# EUROPEAN PATENT SPECIFICATION

(11) **EP 4 142 501 B1**
(45) Date of publication and mention of the grant of the patent: **24.01.2024**
(21) Application number: 21721929.4
(22) Date of filing: 29.04.2021
(51) Int. Cl.: A21D 8/04, A21D 8/08, A21D 10/00, A21D 13/42, A23L 7/104

(54) **INGREDIENT SYSTEM FOR BAKERY PRODUCTS**
ZUTATENSYSTEM FÜR BACKWAREN
SYSTÈME D'INGRÉDIENTS POUR PRODUITS DE BOULANGERIE

(30) Priority: 30.04.2020 EP 20172282
(43) Date of publication of application: 08.03.2023
(73) Proprietor: International N&H Denmark ApS, 2800 Kongens Lyngby (DK)
(72) Inventor: FRANCIOSI, Nic, 1411 Copenhagen K (DK); TSE, Kathryn, Louise, 1411 Copenhagen K (DK)
(74) Representative: International N&H EMEA
(86) International application number: PCT/EP2021/061276
(87) International publication number: WO 2021/219793

(56) References cited:
- EP-A1- 2 044 843
- WO-A1-02/19828
- WO-A1-2019/115388
- WO-A2-03/103404
- WO-A2-2016/010421
- GB-A- 2 417 184

## Description

### FIELD OF THE INVENTION

The present invention relates to an ingredient system comprising fat-coated vegetable fibre particles in combination with enzymes and optionally a fat coated acid, for flatbreads products such as tortillas. The system object of the invention is free from added monoglycerides or mono-diglycerides of fatty acids.

### BACKGROUND OF THE INVENTION

The food industry is facing one of the biggest trends of the decade related to consumers demand of products with less chemically modified products. This trend for the so called "clean label" or "label friendly" food ingredients and systems is based on health and environmental perspectives. The term itself has several definitions, ranging from ingredients that sound natural, to the planetary and social impact of how those ingredients are sourced and processed.

Reformulating products to meet clean-label goals can be tricky, costly, and time consuming. One of the main challenges of the food industry is to keep or even improve the technical functionalities desired in the final product, with new inventive solutions combining fewer chemical processes and/or less chemically modified products.

The present invention presents a "clean label" solution for flatbreads product. This category of baked products includes, but is not to limited to, tortillas, wraps, lavash, roti, chapati and piadina.

Tortillas are baked products made from wheat flour to produce a cohesive viscoelastic dough, like in bread, which is subsequently formed by dividing, rounding and hot pressing, and finally baked on a hot plate oven before the finished product is cooled and packed. Alternative forming processes rely on dough lamination rather than on hot pressing. Typical processes for producing tortilla are known in the art (US 2001/0055635, WO98/00029, US 6558715, EP0863154, WO01/29222, WO 00/58447 and US 5705207, WO 2013/129951).

Unlike bread, tortillas are chemically raised, utilizing, for example, sodium bicarbonate, which evolves CO₂ during the process, creating an underlying aerated structure, varying from layered to foamy, onto which steam pockets with characteristic toasted marks will appear when the thin dough discs are baked on hot plates. The sodium bicarbonate can be combined with an acidulant, such as those from the phosphate family, which solubilizes and reacts with the bicarbonate with the appropriate time and speed providing to the desired bubble structure. This reaction also neutralizes the bicarbonate so that the final tortilla has a neutral pH, rather than a markedly alkaline pH.

Wheat tortillas have a relatively dense structure which is convenient for the effective application of modified atmosphere packaging, (MAP) i.e. thermoforming and /or gas flushing. The aim of these packaging techniques is the reduction of the oxygen level in the headspace of the tortilla or wraps pack. The combination of modified atmosphere with the control of the tortilla parameters, such as pH, water activity and level of preservatives, allows this category of bakery products to reach the shelf life of 3, 6 or 9 months, at ambient temperature without food safety and spoilage risks, constituting a robust and successful design suitable for ambient retail.

The technology factors and supply chain drivers described above have led to ambient long-life tortilla formulations which contain a list of food additives ranging from 6 to 8 E numbers.

Starting from a basic flatbread type of formulation which can consist mainly of wheat flour, water, shortening (a solid plastic fat) and salt, product developers have included chemical raising systems based on sodium bicarbonate plus an acidulant, a salt of phosphate SAPP or SALP, or MCP, contributing to 2 food additives, for example E 500 and E450 (i-to iv).

Tortillas are a light baked product, subjected to a heat treatment only comparable to pasteurization, and often packed in low oxygen environment. In order to provide microbiological stability against molds and bacteria, tortilla formulators have relied on the use of preservatives like salts of propionate (E281 to 283) and salt of sorbate (E 200 to 203), which contribute to additional 2 food additives (typically calcium propionate E 282 and potassium sorbate E 203).

However, the mentioned preservatives are pH dependent and more effective in their undissociated form. In order to be fully functional, the finished tortillas need to reach a lower pH than is achievable solely by neutralization, so food additive such pH regulators such a citric acid E330, malic acid E296 or fumaric acid (E297, GRAS but not allowed in bakery in the EU) are utilized. Initially developers and manufacturers opted for the combination of citric and malic acid for organoleptic reasons, contributing to additional two food additives (E330, E296) to the ingredient declaration list. The tortilla industry adopted organic acid in encapsulated form, which due to the post-baking release, is beneficial to the tortilla structure and appearance (GB 2417184).

The microbiological stability is also controlled by lowering the water activity of the product. For this reason, glycerol (E422) is often used in tortilla formulations. Like other polyols, glycerol directly depresses the water activity, and indirectly it allows for re-balancing the water level in the dough towards lower levels. Glycerol has also a plasticizing effect, rendering a polymer matrix more plastic and flexible, rubber-like, in this food matrix case the polymers in question are constituted mainly by gluten and starch (H. Levine and L. Slade, 1989).

In parallel to the microbiological safety and stability, the tortilla industry and retail sector needed to maintain the physical freshness characteristics. This was achieved principally by the addition of emulsifiers, which perform a technological role in the finished product, described in literature as the formation of complexes with starch, affecting starch granule gelatinization and limiting retrogradation, the main phenomena associated with staling (N. Krogh, 1971-1976; H. F Zobel, K, Kulp, 1996). Common emulsifiers added to the tortilla are monoglycerides or mono-diglycerides of fatty acids (E471) and in some case SSL (E481). A typical long-life tortilla ambient formulation contains the emulsifier (E471). Other emulsifiers can be added and found in tortilla recipes (DATEM, SSL, CSL, Lecithin), but with the objective of strengthening gluten rather than conferring freshness over shelf life.

Tortilla developers also found useful the use of hydrocolloids to improve the strength of the tortilla matrix, the bite and mouthfeel and the moistness of the product. Some studies reported that hydrocolloids have a function against stickiness, and an anti-staling effect (Cereal Chemistry. 70 (3), 1993, R.D. Waniska, L.W Rooney, C.P. Friend). Wheat tortilla formulation can contain hydrocolloids such as CMC (E466), guar gum (E412) or xanthan gum (E415) alone or in combination. The more classic tortilla additive formulation contains guar gum and CMC.

On the dough processing side some relaxation agents such as L-cysteine (E 920) or sulfite salt like sodium bisulfite and metabisulfite (E222 and 223) are also additive often used to improve the extensibility of the dough and so that the tortilla can be more easily pressed to the desired diameter under the hot press. If these chemicals are added during the tortilla process, they have to be declared as additives.

The market drive is towards the reduction of the food additive list. In the last decade the technological evolution of the tortilla recipe and additive formulation has responded to consumer and retailer trends (EU mainly) of reducing the number of food additives in the ingredient declaration list (E numbers). This trend reflects an increased preference towards more natural additives and more sustainable ingredients. For the same reasons in Europe we see a progressive elimination of fat deriving from palm sources in favor of other crops like rapeseed or sunflower.

The first reduction of the number of additives was achieved by optionally selecting one organic acid as pH regulator instead of two, for example only malic acid or citric acid. The selection is based on taste preference. Unlike malic acid, which is produced mostly from chemical synthesis, citric acid is largely available by fermentation, so it is a more natural additive.

Food protection microbiologists gave the manufacturers confidence that one preservative instead of two could be chosen (i.e. calcium propionate alone) without compromising safety or spoilage tolerance of ambient tortilla produced in conjunction with specific process (i.e. MAP packing).

Further additive rationalization was achieved extending the functionality of the encapsulated organic acid already used for pH correction in tortilla. Part of the acid is released in a controlled way during the dough mixing phase allowing the elimination of acidulants, such as phosphates, while the large part of the acid is released after baking, equilibrating in the moisture phase of the tortilla within 100 hours. Organic acids coated with fat have been commercially available for almost 20 years and utilized by some tortilla manufacturers. In these products the purpose of the fat coating has only been to segregate the acid from the rest of the ingredients during dough mixing, allowing a release later in the process. With a growing sensitivity towards sustainability, major retailers and consumer groups expressed preferences regarding the origin and type of fat sources used for bakery, which has also extended to those lipids used for encapsulation. In response, the food additive industry has over time developed and supplied encapsulated acids coated with various types of lipids with specific technical characteristics and botanical origins, such as fully hydrogenated palm, non hydrogenated palm, fully hydrogenated rapeseed oil, fully hydrogenated sunflower oil, fully hydrogenated cotton seed oils and mixture of thereof, as mentioned in (GB 2417184).

The freshness of the tortilla can be also improved by using amylases. These are process aids capable of hydrolyzing the starch polymers during the time window of the gelatinization, before being deactivated in the hot press and baking. The extent of starch retrogradation is diminished in products treated with fresh-keeping amylases. Specific classes of amylases are found to be particularly suited to flatbread and tortilla. The use of fresh-keeping amylases, such as maltogenic and maltotetragenic amylase in wheat tortilla is mentioned (GB 2417184). In the invention disclosed in GB 2417184, these fresh-keeping amylases are used in combination with coated acid and a strengthening emulsifier such as DATEM, and invariably utilizing also mono- di- glyceride in the tortilla additive list.

Depending on flour quality, recipe and process, the complete elimination of emulsifiers, such as mono and diglyceride of fatty acid (E471) can still expose the tortilla manufacturer to problems of dough processability and lead to unsatisfactory quality of tortillas during shelf life, due to increased stickiness and lack of freshness. Aspects of monoglyceride functionality such as the interaction with starch granules, the effect on starch granule swelling and complexing with amylose and starch fragments and dextrin, and furthermore the reduction of adhesion of finished tortilla, are unresolved by the use of fresh-keeping amylases alone.

In conclusion, the elimination of distilled monoglycerides or mono-diglycerides of fatty acids (E471) can cause problems of freshness perception, rollability, flexibility and cracking in tortillas. Single ingredients, such as amylase, can address one aspect of the issue, experienced as freshness, foldability and flexibility, but have a detrimental effect on other aspects such as tortilla stickiness, leading to damage when a consumer takes a tortilla from the pack.

These opposing demands are not only difficult to resolve in the finished product but also create challenges during the process in the form of dough handling. The addition of amylase alone can induce softness and stickiness in dough pieces that can interfere with their release from the proving baskets onto the press, reducing the productivity of the line and demanding the interventions of maintenance.

Simultaneous resolution of all these quality attributes requires balancing opposing effects and is a problem that has not been hitherto solved by tortilla additive producers that have a focus in reducing E number from the tortilla additive list. The problem becomes even more acute in the context of recipes that exclude palm-derived fat for reason of sustainability.

It remains therefore challenging to efficiently and sustainably produce an ambient shelf stable flatbreads product, such as wheat tortilla, without the use of distilled monoglycerides or mono-diglycerides of fatty acids (E471) which has the combined characteristics of a good appearance, as assessed by limited translucency and a fluffy, aerated structure; low stickiness, so that it can be taken from its pack without damage when separating the stack; and good fresh-keeping properties over the shelf-life, which ensure it remains fresh and pliable such that it can be stretched and folded around a filling without breaking or cracking.

### SUMMARY OF THE INVENTION

The problem of eliminating the addition of emulsifiers such as mono- or mono-diglycerides of fatty acids whilst maintaining consumer acceptance in terms of freshness perception, rollability, flexibility and cracking, is solved by the present invention by providing an improved ingredient system made of fat-coated vegetable fibre particles, combined with an enzyme preparation and an optionally an encapsulated acid for flatbread products that need pH control. The present invention presents a balanced functional solution that applied to flatbreads improve freshness and flexibility whilst reducing dough stickiness during processing and adhesion over the shelf life.

Accordingly, in one aspect the present invention relates to an ingredient system for flatbread products comprising the following composition:
A. fat-coated vegetable fibre particles; in an amount of 60-90% by weight of the composition, wherein the fat-coated vegetable fibres comprise a fat with a melting point between 40 and 80 degrees Celsius, selected from fully hydrogenated rapeseed oil or high erucic fully hydrogenated rapeseed oil, fully hydrogenated soybean oil, fully hydrogenated cottonseed oil, fully hydrogenated sunflower oil, fully hydrogenated palm, non - hydrogenated palm or a blend thereof;
B. optionally a fat-coated organic acid;
C. an enzyme preparation containing at least an amylase in an amount of 1-5% by weight of the composition.

The component C may further contain auxiliary enzymes selected from the group consisting of fungal or bacterial protease, fungal cellulase, fungal or bacterial xylanase, fungal 1,3 lipase, glucose oxidase or a blend thereof, as part of an enzyme preparation.

In another aspect, the invention relates to a flatbread product containing between 1.5 to 6% by weight of the flour of the present ingredient system.

The present invention also covers the use of the claimed ingredient system in flatbread products, selected from the group of tortilla, wraps, lavash, roti, chapati and piadina, preferably tortilla.

In a further aspect of the invention, and specifically related to tortilla recipes that contain liquid vegetable oils and exclude the use of additives such as monoglyceride, the ingredient system herein described utilises the multiple functionality and complementarity of its 2 or 3 components to deliver in an efficient and balanced way the following desirable effects:
- tortilla freshness during shelf life
- reduced adhesion and related damage among tortillas
- a good appearance, when minimal translucency is desired,
- a lower pH for product safety, spoilage control and also palatability
which should all be coexisting in the finished tortilla pack at the time of use or consumption.

### BRIEF DESCRIPTION OF THE DRAWINGS

Figure 1. Photograph showing damage due to tortilla-to-tortilla adhesion during the shelf life.
Figure 2. Explanation of foldability scores of tortilla during shelf-life, where the limit of acceptability is 4 (less than 25% of the tortilla breaks during folding/rolling).
Figure 3A and 3B. Instrument for the measurement of freshness parameters. Tortilla extension and break force measured by Texture Analyzer (Stable Micro Systems). The greater the extension measured, the more flexible and fresh appearing the tortilla.
Figure 4. Drawing describing the drop test system devised to verify if dough balls were sticking to the nylon basket during normal and abuse proving conditions.
Figure 5. Illustration of pH levels measured for tortilla prepared from ingredient system examples S.1, S.2 and S.11, compared to combinations of individual components.
Figure 6. Illustration of benefits of ingredient system for reduced tortilla-to-tortilla adhesion over shelf-life for examples S.1 and S.2 compared to combinations of individual components. The critical threshold value is 2 (dotted line), where tortillas can be separated from the stack without damage.
Figure 7. Illustration of the increased in tortilla-to-tortilla adhesion over shelf-life observed when the level of component, as Example A.1, is reduced by 17% compared to the level present in ingredient systems example S.1 and S.2.
Figure 8. Illustration of tortilla stickiness, as measured by probe adhesion of the Texture analyzer for tortillas from Trial 1 and 2 (table 9), prepared with ingredient system examples S.1 and S.2 at day 44.
Figure 9. Illustration of the change in foldability of tortilla during shelf life, for tortilla from Trial 1 and 2 (table 9), prepared with ingredient systems examples S.1 and S.2, compared to those prepared with combinations of individual ingredients.
Figure 10. Illustration of change in extensibility during shelf life for tortilla from Trial 1 and 2 (table 9), prepared with ingredient systems, examples S.1 and S.2, compared to those prepared with combinations of individual ingredients.
Figure 11. Illustration of change in tortilla-to-tortilla adhesion over shelf life for tortilla from Trials 3-6 (table 10), prepared with ingredient systems examples S.3, S.4, S.5 and S.6.
Figure 12A & 12B. Illustrations of the distribution of adhesion scores for tortilla from Trials 3 - 6 (table 10), prepared with ingredient system examples S.3, S.4, S.5 and S.6, at days 91 and 119 of shelf life.
Figure 13. Illustration of change in foldability scores over shelf life for tortillas from Trials 3 - 6- (Table 10), prepared with ingredient systems examples S.3, S.4, S.5 and S.6.
Figure 14. Illustration of change in tortilla extensibility over shelf life for tortillas from Trials 3 - 6- (table 10), prepared with ingredient system examples S.3, S.4, S.5 and S.6.
Figure 15. Illustration of break force vs distance on day 119 of shelf life for tortillas from Trials 3-6- (table 10), prepared with ingredient systems examples S.3, S.4, S.5 and S.6.
Figure 16. Illustration of change in tortilla-to-tortilla adhesion over shelf-life for tortillas from Trials 7-10 (table 11) prepared with ingredient system examples S.7, S.8, S.9 and S.10, which include two types of maltotetragenic amylases as examples of Component C.
Figure 17. Illustration of change in foldability over shelf life for tortillas from Trials 7-10 (table 11) prepared with ingredient system examples S.7, S.8, S.9 and S.10, which include two types of maltotetragenic amylases as examples of Component C.
Figure 18. Illustration of change in tortilla extensibility for tortillas from Trials 7 - 10 (Table 11) prepared with ingredient system examples S.7, S.8, S.9 and S.10, which include two type of maltotetragenic amylases as examples of Component C.
Figure 19. Illustration of effect of ingredient system on change in tortilla-to-tortilla adhesion over shelf-life for ingredient system examples S.3, S4 and S.8.
Figure 20. Illustration of effect of ingredient system on change in foldability of tortillas over shelf-life for ingredient system examples S.3, S4 and S.8.
Figure 21. Illustration of effect of ingredient system on change in extensibility of tortillas over shelf-life for ingredient system examples S.3, S4 and S.8.
Figure 22. Illustration of pH of tortilla from trials 11 - 12 (Table 12), prepared with ingredient system examples S.11 and S.12, which contain Components A and C only.
Figure 23. Illustration of change in tortilla-to-tortilla adhesion over shelf life for tortilla from trials 11 - 12, prepared with ingredient system examples S.11 and S.12, which contain Components A and C only.
Figure 24. Illustration of change in foldability over shelf life for tortilla from trials 11 - 12, prepared with ingredient system examples S.11 and S.12, which contain Components A and C only.
Figure 25. Illustration of change in tortilla extensibility over shelf life for tortilla from trials 11-12, prepared with ingredient system examples S.11 and S.12, which contain Components A and C only.
Figure 26A and 26B. Illustrative photographs of the coated fat (triglyceride)-fibre particle changes when exposed to water over time and during heating. 26A. relates to coated fat-fibre particle in water, heated from 25°C to 60°C at 10°C/minute. 26B relates to Coated fat-fibre particle in water, 20°C (below melting temperature of fat).

### DETAILED DESCRIPTION OF INVENTION

The present invention relates to an ingredient system for flatbread products comprising the following composition:
A. fat-coated vegetable fibre particles in an amount of 60-90% by weight of the composition, wherein the fat-coated vegetable fibres comprise a fat with a melting point between 40 and 80 degrees Celsius, selected from fully hydrogenated rapeseed oil or high erucic fully hydrogenated rapeseed oil, fully hydrogenated soybean oil, fully hydrogenated cottonseed oil, fully hydrogenated sunflower oil, fully hydrogenated palm, non - hydrogenated palm or a blend thereof;
B. a fat-coated organic acid in an amount of 0-30% by weight of the composition;
C. an enzyme preparation containing at least an amylase in an amount of 1-5% by weight of the composition.

The ingredient system of the present invention may also contain other materials in an amount up to 5% by weight of the composition, such as fillers and carriers, which are not functionally active ingredients in the system.

Component A. This component comprises fat-coated vegetable fibre particles prepared with a solid fat source, mostly consisting of triglycerides. Technologically suitable fat sources include fully hydrogenated rapeseed (canola) oil, fully hydrogenated high erucic rapeseed oil, fully hydrogenated soybean oil, fully hydrogenated cottonseed oil, fully hydrogenated sunflower oil, fully hydrogenated palm oil, non-hydrogenated palm oil or a blend thereof.

The fibre included in component A can be selected from wheat fibre, citrus fibre, carob tree husk fibre, psyllium husk powder, sugar beet fibre, soy fibre, pea fibre, apple fibre, carrot fibre, oat fibre, potato fibre and bamboo fibre. The fat-coated vegetable fibre particles may be prepared by intimately mixing the fibre with the molten fat and atomizing the slurry in a cold air-stream. Alternatively, the fat-coated vegetable particles may be prepared by spraying the molten fat onto the fibre particles under continuous mixing, followed by cooling.

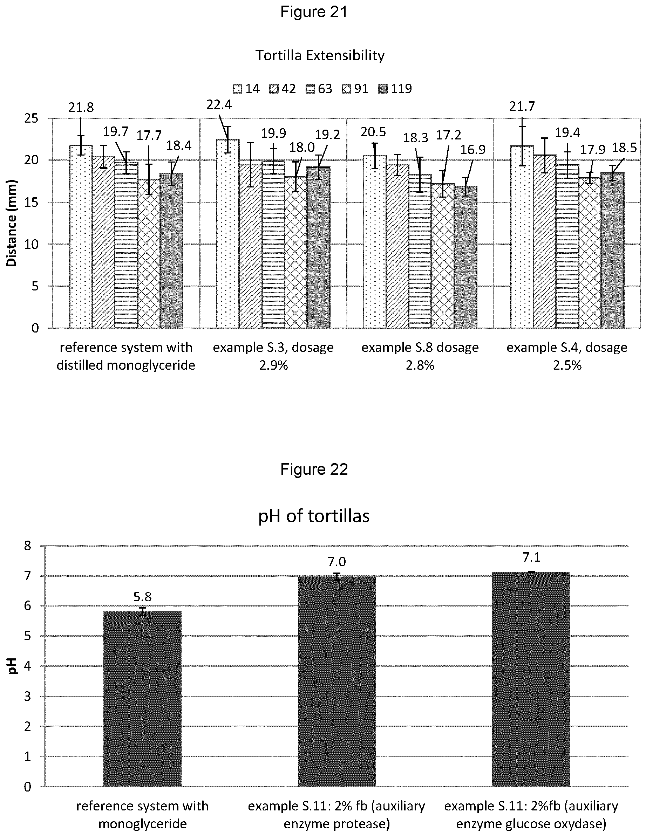

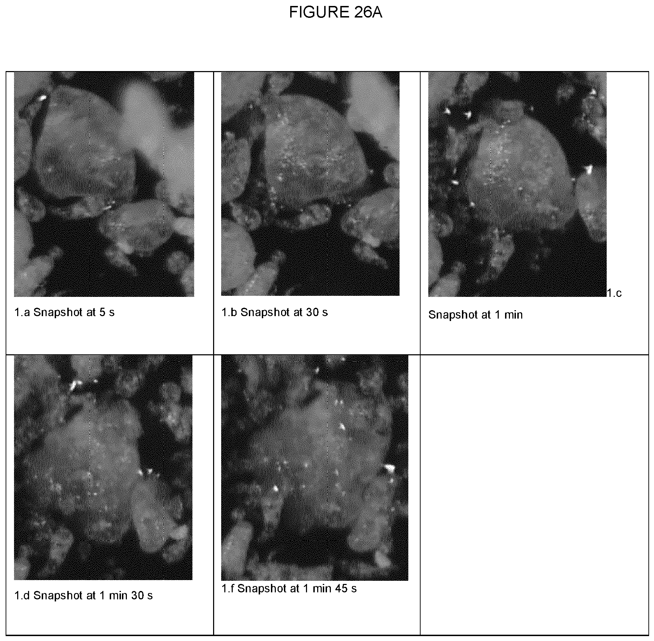

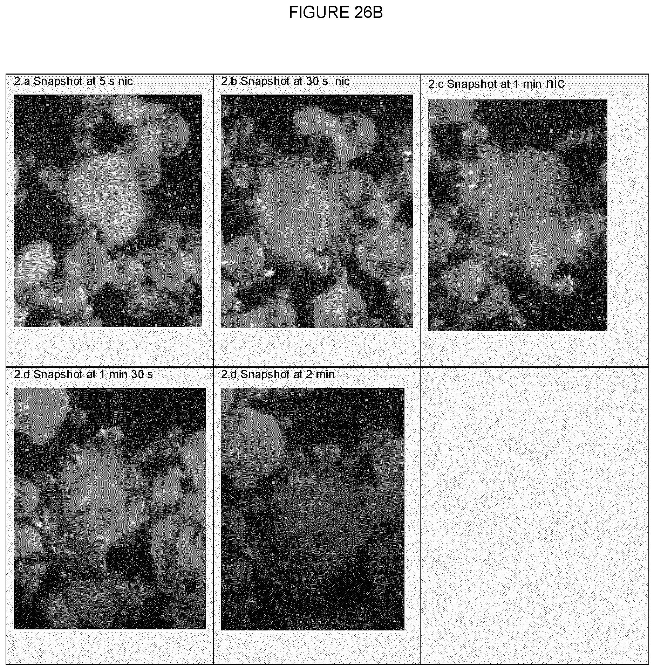

The resulting composite particles have a particle size of 30-800 µm (Figure 21, picture 1.A). Their morphology is subject to changes over time when placed in water and the structural changes are accentuated when the temperature increases. As the particle is placed in water, the hydrophilic fibre interior slowly hydrates, swells and starts fragmenting and dispersing the fat layer. The exposed fibre particles continue its hydration (Figure 26A and B) and is released in the dough system.

The fat-coated vegetable fibre particles comprise from 10% to 30% by weight of vegetable fibres and from 70 to 90% by weight of a fat with a melting point between 40 and 80 degrees Celsius.

The primary function of the vegetable fibre in component A is as a carrier of the fat, with the delivery mechanism shown in Figure 26A and 26B. However, it can have a secondary effect which is to counter unwanted effects arising from the action of the amylase, Component C. The hydrolytic activity of Component C on the starch can result in unwanted side effects such as excessive softening of the dough in the early dough processing phases, and on the rounded dough balls, compromising their processability. This can be moderated by the delayed hydration of the vegetable fibre of Component A.

Component B. This component contains a fat-coated organic acid, such as citric, malic or fumaric acid. The coated material is conveniently chosen from a suitable fat source such as fully hydrogenated rapeseed oil or hydrogenated sunflower oil or other vegetable source. The acid is used for pH correction: neutralizing and lowering the final tortilla pH to values below 6.0.

Component B is an acid coated with fat layer, using materials such as described in patent GB 2417184. It can also be specifically formulated to contain the same fat phase as used in components A.1, A.2, A.3 and A.4 (table 1). It is included in the ingredient system to address issues of pH correction, tortilla structure and appearance, as in patent GB 2417184, but also as a supplementary source of the fat which has been found to control adhesion of the tortilla over shelf-life.

The fat coating of Component B serves two purposes: the primary purpose is segregation of the organic acid core, during dough mixing and preventing the direct reaction with sodium bicarbonate and controlling that the dissolution does not occur before the gluten network is adequately formed. A secondary purpose is to contribute to the total solid fat delivered to the flatbread recipe, together with component A.

Component B can have a fat proportion from 25% to 45% and the organic acid, such as citric or malic acid is 55% to 75% of the weight.

In a preferred embodiment of the invention, the fat-coated organic acid comprises 60-70% by weight citric acid or malic acid and 30-40% by weight of a fat such as such as fully hydrogenated rapeseed or high erucic fully hydrogenated rapeseed oil, fully hydrogenated soybean oil, fully hydrogenated cottonseed oil, fully hydrogenated sunflower oil, fully hydrogenated palm or non-hydrogenated palm or a blend thereof.

However, it is possible to remove component B from the ingredient system in specific flatbread products that utilize alternative methods of pH regulation, alternative preservation methods not depending on pH, alternative raising systems not requiring neutralization, or even because due to operational or commercial reasons, it might be preferable to add it separately to the tortilla recipe.

Component C. This component comprises a fresh-keeping amylase, in particular an exoamylase of the family of glucan 1,4-alpha-maltotetrahydrolases (E.C. 3.2.1.60), hereafter also referred to as maltotetragenic amylase. The maltotetragenic amylase has the main fresh-keeping effect in flatbread, mainly tortillas. Its action is related to starch hydrolysis, principally starting from non-reducing end (exo-), cleaving molecule of 4 glucose (maltotetraose), the enzyme action ends at the inactivation temperature around 85°C. Suitable malto-tetragenic amylases and methods of their preparation are disclosed in some patent documents part of the state of the art, such as WO 20097083592 (here referred as maltotetrahydrolase type 1) and in EP2432875 B1 (here referred as maltotetrahydrolase type 2).

The amylase of component C can be delivered as single enzyme or optionally, in mixture with other enzymes including activities selected from the group consisting of fungal or bacterial protease, fungal cellulase, fungal or bacterial xylanase, 1,3 lipase, glucose oxidase or a blend thereof. In terms of function, a fungal protease helps dough relaxation; xylanase or cellulase for dough relaxation and strengthening, 1,3 lipase producing fatty acids from triglycerides affects the starch swelling properties. Glucose oxidase reduces dough surface stickiness and helps dough processability. Any of these enzymes acts as process aids during preparation of the dough part. The auxiliary enzyme or enzymes are added to complement the action of the other components for instance, the protease helps in pressability when the tortilla producer wants to avoid using L cysteine or sulphite. Xylanases can improve dough relaxation and at the same time help and maintain the dough strength.

Although the functionalities of some of the individual components of the ingredient system are known to some tortilla producers (such as B and C), as for example the benefits on tortilla appearance achieved when using component B and the effect of component C on fresh-keeping, the surprising performance of the combination of these ingredients in the inventive system on all aspects of flatbread product quality have not been previously demonstrated. The performance of the ingredient system of the invention in managing foldability, fresh-keeping and adhesion is significantly greater than could be assumed from an understanding of the performance of the individual components. This is particularly the case given that the individual components can have contrasting effects on the desirable characteristics such that balancing these competing functionalities is a non-trivial task.

The present invention also covers a flatbread product containing the previously described ingredient system in an amount between 1.5 to 6% by weight of the flour

The produced flatbread product object of the invention has no added monoglycerides or mono-diglycerides of fatty acids, which produces benefits in combined desired technical features of the product, as demonstrated in the experimental section, such as:
- a low adhesion of maximum score 2, so that tortillas can be taken from the stack without damage;
- a desired freshness defined by a foldability minimum score 4, and;
- an extensibility of minimum 17 mm

These features provide the product with a good appearance due to the limited translucency, suitable for a long ambient shelf life, with good flexibility and minimal adhesion damage when separated from each other from the package.

Therefore, the flatbread product of the invention has superior in some aspects or at least equal in other aspects, technical qualities, as reference flatbread containing monoglycerides at the same time of the shelf life, produced under the same conditions.

Additionally, the inventive combination of the ingredient system, prevents that in the production of the flatbread product, the portioned and moulded dough balls sticks to the proofing baskets. It allows proper release to the press in the same way as flatbread dough prepared with the addition of emulsifiers.

In one embodiment of the invention, the flat bread comprises the described ingredient system, wherein:
component A is present in an amount between 1.5 and 2.5% by weight of the flour,
component B is present in an amount between 0.3 and 1.2% by weight of the flour, and
component C is present in an amount between 50 to 2000 ppm by weight of flour.

In another embodiment of the invention, the flat bread comprises the described ingredient system, wherein:
component A is present in an amount between 1.5 and 2.5% by weight of the flour,
component C is present in an amount between 50 to 2000 ppm by weight of flour;
wherein component B is absent in the flatbread application that does not need pH control.

In a preferred embodiment, component (A) of the ingredient system is present in an amount of at least 1.5%, preferably 1.8%, based on the weight of the flour. Component (B) is present in an amount of 0.35% and increase to a max level of 1.2% on flour basis, to achieve the convenient tortilla pH target (this level is based on a bicarbonate level of 0.5%fb), and wherein component (C) is present in an amount of at least 100 ppm based on the flour weight.

The present invention also covers the use of the claimed ingredient system in flatbread products, selected from the group of tortilla, wraps, lavash, roti, chapati and piadina, preferably tortilla.

In a preferred embodiment, the invention covers the use of a fat coated vegetable fibre particles as described above as component A, together with an amylase as component C, functionally replacing emulsifiers (monoglyceride or mono-diglyceride) in a bakery product, preferably a flatbread or tortilla, in which the fat coated vegetable fibre particles comprise 10-30% by weight of vegetable fibres and 70-90% by weight of a fat such as a hydrogenated vegetable oil.

In the execution of the invention solid fat may be spray-coated onto vegetable fibre particles to produce a composite material that, used in combination with a specific class of fresh-keeping amylases, provides a long-life tortilla without the inclusion of food additives such as distilled monoglycerides of fatty acids, mono-diglycerides of fatty acids (E471) and of hydrocolloids, which are commonly used in tortilla formulations. The novel ingredient system is also beneficial to the production of tortilla in which vegetable oils such as sunflower oil or rapeseed oil are used instead of plastic fat used in bakery (shortenings) or palm extracted fats.

The method of producing the present ingredient system, comprises the steps of: preparing the fat-coated vegetable fibre particles by (i) selecting a fat source that has a melting point between 40°C and 80°C, (ii) melting the fat, (iii) mixing the melted fat with the selected vegetable fibres, and (iv) atomizing the melted fat-vegetable fibre suspension into a cold air-stream to prepare discrete fat-coated vegetable fibre particles.

Alternatively, the discrete fat-coated fibre particles can be made by (i) selecting a fat source that has a melting point between 40°C and 80°C, (ii) melting the fat, (iii) atomizing the melted fat onto the selected vegetable fibre under high shear mixing and in a jacketed vessel, and (iv) cooling the fat-coated fibre particles under continuous shear to below the melting point of the fat, to give discrete fat-coated vegetable fibre particles.

Alternatively, the discrete fat-coated fibre particles can be made by (i) selecting a fat source that has a melting point between 40°C and 80°C, (ii) melting the fat, (iii) spraying the melted fat onto the selected vegetable fibre in a fluidized bed coater until the requisite amount of fat has been added and (iv) cooling the fat-coated fibre particles to below the melting point of the fat, to give discrete fat-coated vegetable fibre particles.

The fat-coated organic acid is made by hot-melt coating in a fluid bed. The acid particles are filled into the bed and fluidized on a stream of hot air. The molten fat is atomized onto the fluidized acid particles, into such a way as to form a continuous and uniform coating. The final product is a fat-coated particle with a discrete core of organic acid.

Once thus prepared, the fat-coated vegetable fibre particles and the fat-coated organic acid particles can be mixed together in a suitable mixer, with the enzyme-containing powder, to form the final ingredient system.

The benefits obtained with the ingredient system are also described in the experimental section below.

### EXPERIMENTAL SECTION

### MATERIALS

In preferred embodiments of the invention:
Component A was produced from sugar beet fibre, coated with fully hydrogenated rapeseed oil or high erucic rapeseed oil or a mixture of both. The composition of the particle is at least 8%, preferably between 10 -15% sugar beet fibre, and the remaining part is fully hydrogenated rapeseed oil.
Component B was produced by fluid bed hot-melt coating of citric acid or malic acid with an appropriate fat source. The composition is at least 25% fat and preferably 30% to 45% fat and the remainder being citric or malic acid. The fat coating is preferably the same as described in Examples A.1, A.2, A.3 or A.4 in order to contribute to the control of adhesion among tortilla. Suitable products can be selected from the Protex range supplied by DuPont Nutrition Biosciences ApS (Tårnvej 25, DK-7400 Grindsted, Denmark) but also coated acid from other suppliers can be suitable. The component C is an amylase from the family of maltotetragenic amylases, glucan 1,4-alpha-maltotetrahydrolases (E.C. 3.2.1.60) of the type as described in WO2009083592 later referred as type 1 and the more thermostable variant as described in patent EP2432875 B1 later referred as type 2.

Unlike components A and B, component C should be included in the system formulation as a direct blend, with a carrier, as a single enzyme or in a complex with other auxiliary enzymes. A test preparation of maltotetragenic amylase containing 50 amylase units (maltotetrahydrolase type 1) or 100 units per gram of preparation with maltotetrahydrolase type 2) where the activity is measured using a standard assay for amylase activity, such as the Ceralpha assay (Megazyme, Ireland) was obtained from DuPont Nutrition Biosciences ApS (Tårnvej 25, DK-7400 Grindsted, Denmark).

The enzyme preparations alone or in complex with auxiliary enzyme activities, can be obtained from DuPont Nutrition Biosciences ApS (Tårnvej 25, DK-7400 Grindsted, Denmark). Alternative preparations of the amylase can be utilized for the purposes of the invention.

The component C can be further used to deliver an auxiliary enzyme, as a single activity such as fungal protease, glucose oxidase, fungal cellulase, bacterial xylanase or 1,3 lipase, or in a complex of the above.

### EXAMPLES

Four examples of fat-coated fiber were prepared as shown in Table 1. In each case, the fat phase was melted and heated to above 85°C. The fiber was added to the hot fat and mixed thoroughly to form a uniform and homogeneous mixture. The fiber-fat slurry was pumped into a Niro NP6,3 spray tower and atomized by rotating disk into a cold air-stream. Process parameters are given in Table 2.

**Table 1: Compositions of 4 examples of fat coated vegetable fibre: component A**

| Example | A.1 | A.2 | A.3 | A.4 |
|---|---|---|---|---|
| Fat Phase | Fully hydrogenated rapeseed oil 1740g | Fully hydrogenated high erucic rapeseed oil 1820g | Fully hydrogenated high erucic rapeseed oil 380g | Fully hydrogenated high erucic rapeseed oil 4500g |
| | | | Fully hydrogenated rapeseed oil 1400g | Fully hydrogenated rapeseed oil 4500g |
| Fiber | Sugarbeet fiber 260g | Sugarbeet fiber 180g | Sugarbeet fiber 220g | Sugarbeet fiber 1000g |

**Table 2: Process parameters for preparation of fat coated vegetable fibre: component A**

| **Parameter** | **Setting** |
|---|---|
| Air Flow (kghr⁻¹) | 500 - 900 |
| Inlet air (°C) | -10 - 10 |
| Outlet air (°C) | 5 - 20 |
| Atomizing wheel (rpm) | 10000 - 15000 |
| Feed Temp (°C) | 85 - 105 |

### EXAMPLES of Component B

Three examples of fat-coated organic acid are shown in Table 3. In each case, the fat phase was melted and heated to above 85°C before being sprayed onto the organic acid in a fluid bed (Aeromatic MP1). Spraying was carried out under conditions selected to ensure a uniform, smooth coating that comprised a multiplicity of layers. Process parameters are given in Table 4.

**Table 3: Compositions of 3 examples of fat coated acids: component B**

| Example | B.1 | B.2 | B.3 |
|---|---|---|---|
| Fat Phase | Fully hydrogenated rapeseed oil 30% | Fully hydrogenated high erucic rapeseed oil 30% | Fully hydrogenated high erucic rapeseed oil 15% |
| | | | Fully hydrogenated rapeseed oil 15% |
| Organic Acid | Citric acid | Citric acid | Malic acid |
| | 70% | 70% | 70% |

**Table 4 : Process parameters for preparation of fat coated acids: component B**

| Parameter | Setting |
|---|---|
| Amount Organic Acid (kg) | 2,8 |
| Amount Fat Coating (kg) | 1,2 - 1,8 |
| Product Temperature (°C) | 43 - 53 |
| Inlet Air Temperature (°C) | 45 - 55 |
| Air Flow Rate (m³hr⁻¹) | 50 - 90 |
| Atomizing Air Pressure) | 90 - 110 |
| Atomising Air Temperature (°C) | 90 - 110 |
| Feed Temperature (°C) | 90 - 110 |
| Spray Rate (kghr⁻¹) | 0,75 - 1,25 |

### EXAMPLES of the complete ingredient system preparation

The ingredient system was prepared by mixing a fat-coated vegetable fibre, component A (examples A.1, A.2, A.3, and A.4), and optionally a coated acid component B (examples B.1, B.2 and B.3) together with the enzyme preparation, component C (such as maltotetrahydrolase alone or in a complex with auxiliary enzymes such protease or xylanase), a filler, such as calcium carbonate in a powder mixer suitable to obtain a homogeneous powder preparation.

**Table 5. Formulation of ingredient system**

| Ingredient system composition example S.1 and S.2 | | | |
|---|---|---|---|
| System Component | | Example S.1 | Example S.2 |
| | | | |
| Component A, fat-coated fiber | EXAMPLE A.1 | 70-75 | 75-80 |
| Component B, coated acid 70% payload | EXAMPLE B.1 | 15-20 | 10-15 |
| Component C, amylase | Maltotetrahydrolase (type 1) 50 unitiq | 1-5 | 1-3 |
| Filler and anticaking | Calcium Carbonate | 5-0 | 0-7 |
| Total | | 100 | 100 |
| Dose on flour basis | | 2.5-3.5 | 2.35-2.85 |

**Table 6. Ingredient system composition example S.3, S.4, S.4 and S.6**

| System Component | | EXAMPLE S.3 | EXAMPLE S.4 | EXAMPLE S.5 | EXAMPLE S.6 |
|---|---|---|---|---|---|
| Component A, fat-coated fiber | Example A.1 | 75-80 | - | - | - |
| | Example A.3 | - | | 70-75 | 70-75 |
| | Example A.4 | - | 70-75 | | |
| Component B, coated acid 70% | Example B.1 | 13-18 | 20-25 | 13-28 | 20-25 |
| Component C, enzyme complex with amylase | Maltotetrahydrolase(type 1) 50 unit/g | 2-5 | 1-6 | 2-5 | 1-6 |
| Filler and anticaking | Calcium Carbonate | 3-5 | 0-1 | 3-5 | 0-1 |
| Total | | 100 | 100 | 100 | 100 |
| Dose on flour basis | | 2,2-3,5 | 2,2-3,0 | 2,5-3,2 | 2,0-2,8 |

**Table 7. Ingredient system composition example S.7, S.9 (maltotetrahydrolase type 1) and S.8 and S10 maltotetrahydrolase type 2)**

| System Component | | EXAMPLE S.7 | EXAMPLE S.8 | EXAMPLE S.9 | EXAMPLE S.10 |
|---|---|---|---|---|---|
| Component A, fat-coated fiber | EXAMPLE A.1 | 70-80 | 70-80 | - | - |
| | EXAMPLE A.4 | - | - | 70-80 | 70-80 |
| Component B, coated acid 70% | EXAMPLE B.1 | 15-20 | 15-20 | 15-20 | 15-20 |
| Component C, enzyme complex with amylase | *Maltotetrahydrolase type 1 50* unit/g | 4-6 | - | 4-6 | - |
| | *Maltotetrahydrolase type 2 100 unit*/*g* | - | 2-3 | - | 2-3 |
| Filler and anticaking | Calcium carbonate | | 0-1 | 0-1 | 0-1 |
| Total | | 100 | 100 | 100 | 100 |
| Dose (% on flour basis) | | 2,5-3,0 | 2,5-3,0 | 2,5-3,0 | 2,5-3,0 |

**Table 8: Ingredient system composition example S.11 and S.12, prepared without Component B**

| System Component | | EXAMPLE S.11 | EXAMPLE S.12 |
|---|---|---|---|
| Component A, fat-coated fiber | EXAMPLE A.3 | 85-93 | 90-95 |
| Component C, enzyme complex amylase and auxiliary enzyme (glucose oxidase or protease) | *Maltotetrahydrolase type 1 50 unit*/*g* | 1-7 | 1-8 |
| Filler and anticaking | Calcium carbonate | 10-1 | 1-8 |
| Total | | 100 | 100 |
| Dose (% on flour basis) | | 2% | 1.5-1.6% |

### Test of the ingredient system in tortilla

Tortillas were produced using the ingredient system blend made of components A, B and C as described in examples S.1 to S.10. For all trials, the reference tortilla were baked using POWERFlex 1100^{®}, a commercial product available from DuPont Nutrition Biosciences ApS (Tårnvej 25, DK-7400 Grindsted, Denmark) and which contains distilled monoglyceride coated onto vegetable fibre particles, adopting a technology described in customer education publication Technical Memorandum TM 1025 e2 that can be obtained from DuPont Nutrition Biosciences ApS (Tårnvej 25, DK-7400 Grindsted, Denmark and to a certain extent also in WO2019115388A1 , and citric coated with fully hydrogenated rapeseed oil and amylase. The amount of acid contained allows for neutral or slight acid pH with the given amount of bicarbonate utilized (0.5% flour basis). Examples of other suitable systems that can be used as a reference are POWERFlex^{®}, 2301, POWERFlex^{®} 2201, POWERFlex^{®} 3205 which utilize hydrocolloid as well as monoglyceride and enzyme.

The reference and the test recipe can also contain additional coated acid, such as Protex 2300 NP, as indicated in tables 8 and 9, utilized to adjust the tortilla pH to a desired target pH. Protex 2300 NP is a commercial product, available from DuPont Nutrition Biosciences ApS (Tårnvej 25, DK-7400 Grindsted, Denmark).

In the trials the total fat level in the recipes is held constant at 8% on flour basis by allowing for contributions from Component A, the fat-coated vegetable fiber and Component B, the fat-coated acid and adjusting the amount of rapeseed oil added.

The recipes for the tortilla trials are given in Table 8, 9 and 10.

**Table 9: recipe tortilla with ingredient system examples S.1 to S.2**

| | Reference | Trial 1 | Trial 2 |
|---|---|---|---|
| Flour | 100 | 100 | 100 |
| Water | 42 | 42 | 42 |
| Rapeseed Oil | 8 | 6 | 6 |
| Glycerol | 5 | 5 | 5 |
| Salt | 1.5 | 1.5 | 1.5 |
| Sugar | 1,0 | 1,0 | 1,0 |
| Sodium bicarbonate | 0.5 | 0,5 | 0,5 |
| Calcium propionate | 0,3 | 0,3 | 0,3 |
| Potassium sorbate | 0,3 | 0,3 | 0,3 |
| Protex 2300 NP | 0.55 | 0.55 | 0.55 |
| ingredient system with emulsifier | 1.30 | | |
| Ingredient system Example S.1 | | 2.5 | |
| Ingredient system Example S.2 | | | 2.35 |

**Table 10: recipe tortilla with ingredient system examples S.4 to S.6**

| | Ref | Trial 3 | Trial 4 | Trial 5 | Trial 6 |
|---|---|---|---|---|---|
| Flour | 100 | 100 | 100 | 100 | 100 |
| Water | 42 | 42 | 42 | 42 | 42 |
| Rapeseed Oil | 8 | 6 | 6 | 6 | 6 |
| Glycerol | 5 | 5 | 5 | 5 | 5 |
| Salt | 1.5 | 1.5 | 1.5 | 1.5 | 1.5 |
| Sugar | 1,0 | 1,0 | 1,0 | 1,0 | 1,0 |
| Sodium bicarbonate | 0.5 | 0.5 | 0.5 | 0.5 | 0.5 |
| Calcium propionate | 0,3 | 0,3 | 0,3 | 0,3 | 0,3 |
| Potassium sorbate | 0,3 | 0,3 | 0,3 | 0,3 | 0,3 |
| Protex 2300 NP | 0.4 | 0.4 | 0.4 | 0.4 | 0.4 |
| ingredient system with emulsifier | 1.30 | | | | |
| Ingredient system Example S.3 | | 3.3 | | | |
| Ingredient system Example S.4 | | | 2.5 | | |
| Ingredient system Example S.5 | | | | 3 | |
| Ingredient system Example S.6 | | | | | 2.5 |

**Table 11: recipe tortilla with ingredient system examples S.7 to S. 10**

| | Ref | Trial 7 | Trial 8 | Trial 9 | Trial 10 |
|---|---|---|---|---|---|
| Flour | 100 | 100 | 100 | 100 | 100 |
| Water | 42 | 42 | 42 | 42 | 42 |
| Rapeseed Oil | 8 | 6 | 6 | 6 | 6 |
| Glycerol | 5 | 5 | 5 | 5 | 5 |
| Salt | 1.5 | 1.5 | 1.5 | 1.5 | 1.5 |
| Sugar | 1,0 | 1,0 | 1,0 | 1,0 | 1,0 |
| Sodium bicarbonate | 0.5 | 0.5 | 0.5 | 0.5 | 0.5 |
| Calcium propionate | 0,3 | 0,3 | 0,3 | 0,3 | 0,3 |
| Potassium sorbate | 0,3 | 0,3 | 0,3 | 0,3 | 0,3 |
| ingredient system with emulsifier | 1.30 | | | | |
| Ingredient system Example S.7 | | 2.9 | | | |
| Ingredient system Example S.8 | | | 2.9 | | |
| Ingredient system Example S.9 | | | | 2.9 | |
| Ingredient system Example S.10 | | | | | 2.9 |

**Table 12: recipe tortilla with ingredient system examples S.11 to S.12 - example without Component B, coated acid**

| | Ref | Trial 11 | Trial 12 |
|---|---|---|---|
| Flour | 100 | 100 | 100 |
| Water | 42 | 42 | 42 |
| Rapeseed Oil | 8 | 6 | 6 |
| Glycerol | 5 | 5 | 5 |
| Salt | 1.5 | 1.5 | 1.5 |
| Sugar | 1,0 | 1,0 | 1,0 |
| Sodium bicarbonate | 0.5 | | 0.5 |
| Baking powder (E500, E450) | | 1.2 | |
| SAPP (E450 | | | 0.65 |
| Calcium propionate | 0,3 | 0,3 | 0,3 |
| Potassium sorbate | 0,3 | 0,3 | 0,3 |
| ingredient system with emulsifier and acid | 1.7 | | |
| Ingredient system Example S.11 protease | | 2.0 | |
| Ingredient system Example S.12 GOX | | | 2.0 |

### METHODS

### Method to manufacture tortillas in a pilot plant

The tortilla trials were carried out in a pilot plant using a Kemper spiral batch mixer to mix the dough, a Koenig moulder to prepare the dough balls and a Lawrence Micro Combo 3 tortilla press and oven. The finished tortilla were packaged using a Multivac modified atmosphere packaging unit.

### Process to make a tortilla

1. Mix all dry ingredients in the bowl 1 minute slow - add water
2. Mix 1 minutes slow - 5 minutes fast (gear 2). Mixing time can depending on flour type and recipe and adjusted by the baker upon dough development assessment
3. Dough temperature target 30-32°C
4. Scale using Koenig moulder, using guidelines below:
   - 20 cm (8"): 48 g
   - 25 cm (10"): 78 g
5. Rest in cabinet for 10 minutes at 30°C/55 RH
6. Run the dough through the press and oven at settings reported in Table 13
7. Cool tortillas on sieved trays for 10 minutes at ambient temperature, use gloves when handling the tortillas
8. Pack the tortillas with 8 pieces in each package using program 08: 90,0 vacuum, 25,0 gas (70% Nitrogen; 20% CO2) and 2,0 seal
9. Clean the tortilla machine after use.
10. Store at ambient temperature.

**Table 13: Process parameters for the baking process**

| Parameter | Settings for Small Tortilla | Settings for Large Tortilla |
|---|---|---|
| Weight dough g /diameter cm | 48/20 | 78/25 |
| Press pressure | 700 | 1000 |
| Press time, s | 1,6 | 1,8 |
| Press temperature upper, °C | 200 | 200 |
| Press temperature lower, °C | 180 | 180 |
| Baking temp set point, °C | 230 | 230 |
| Baking time, s | 21 sec | 30 sec |
| Cycle rate set point | 13 | 16 |
| Teflon belt delay time | 0,3 | 0,3 |
| Teflon belt speed adjust | 100 | 100 |

### Method for dough processability assessment

One of the issues associated with the simplification and elimination of additives from tortilla recipe is a decrease in processing quality. Dough balls positioned in the proving baskets undergo a rest period of typically of 5-10 min before pressing, and in cases of stoppages, adhere to the baskets and cannot be released onto the press chute. This issue might occur for example if there is an unplanned maintenance stop on the line. A drop test was developed to test this specific aspect of the ingredient system performance and this was executed in parallel with the baking trials reported above.

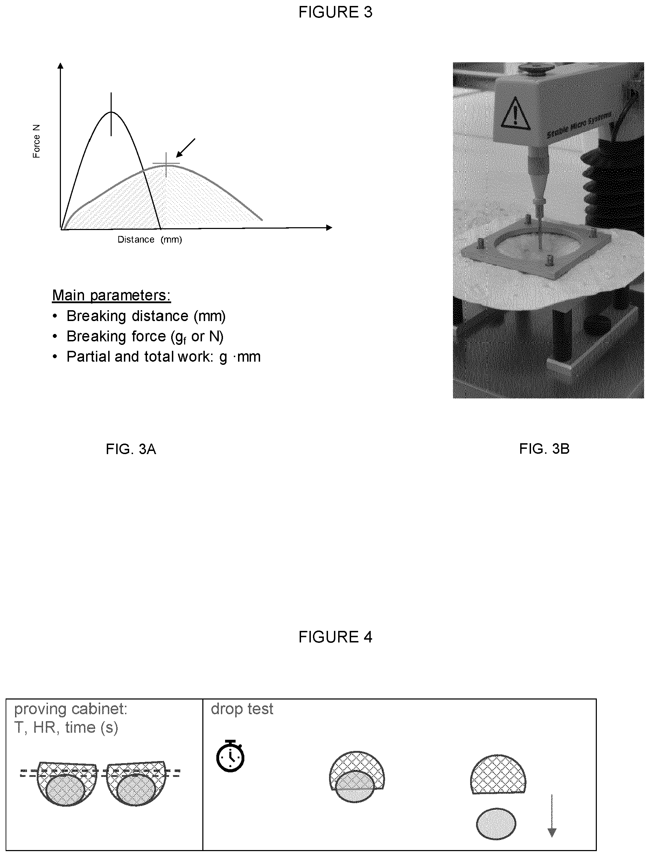

Specific trays, hosting nylon net baskets, were purpose constructed. The dough balls were placed in the proving baskets after being scaled and rounded, and proved at a set humidity and temperature for a variable resting time, according to the decided test conditions. The baskets were then turned upside down allowing the dough balls to drop by gravity onto a table. The operator recorded the time needed to release the dough balls. Figure 4 illustrates the test device.

In the challenge test, the proof time was extended from 10 min to 30 min and the relative humidity and temperature adjusted to be between 55% to 65% and 35-36°C respectively.

### Method for tortilla evaluation

### Adhesion assessment

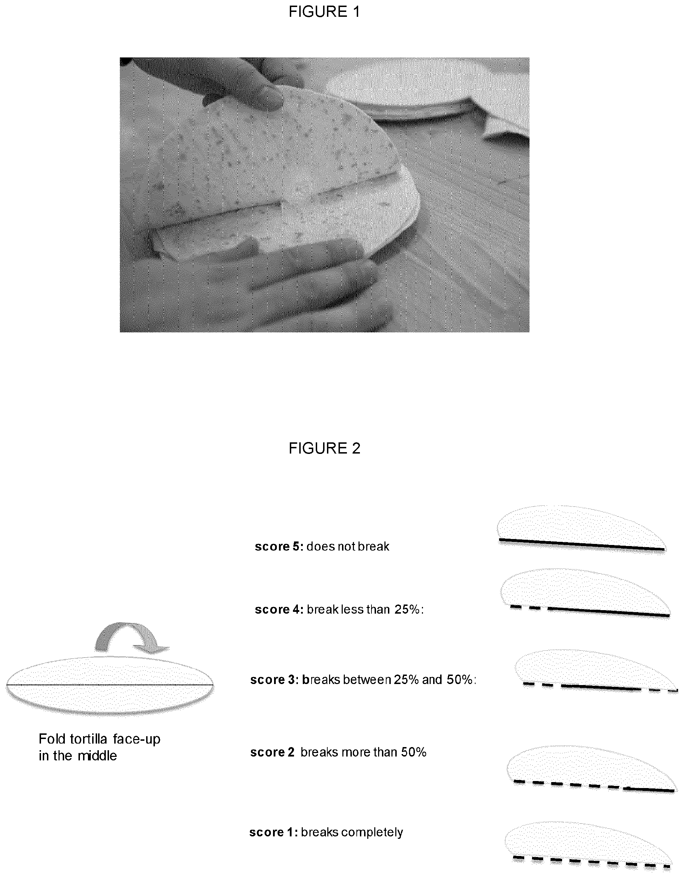

One of the technical features of wheat tortilla is their propensity to adhere to each other after storage when the user or consumer is taking a single tortilla from the pack. Figure 1 shows an example where stickiness becomes problematic, and results in a damaged tortilla.

The method adopted to evaluate adhesion during the shelf life is performed by one assessor that opens a pack of tortilla stored in test conditions, same top weight on the packet, detaches one tortilla at the time recording a score. The scoring utilized is described below:
Score 1: No adhesion detected, the tortillas detach freely without sound
Score 2: Some sounds (zippering) can be heard when pulling the tortilla apart, but there is no damage
Score 3: The skin of some steam pockets or some puffings is peeling away when pulling tortillas apart
Score 4: The tortilla is damaged when pulled apart

### Foldability assessment

One major aspect of tortilla performance is the foldability - the ability of the tortilla to be folded without breaking. This feature is evaluated over the shelf-life. The foldability can be assessed by a technician consistently bending the tortilla in the centre line and using a score system like the one represented in figure 2. This method was used to score the flexibility performance of the same batch of tortilla over 180 days (Figure 2).

### Determination of tortilla extensibility

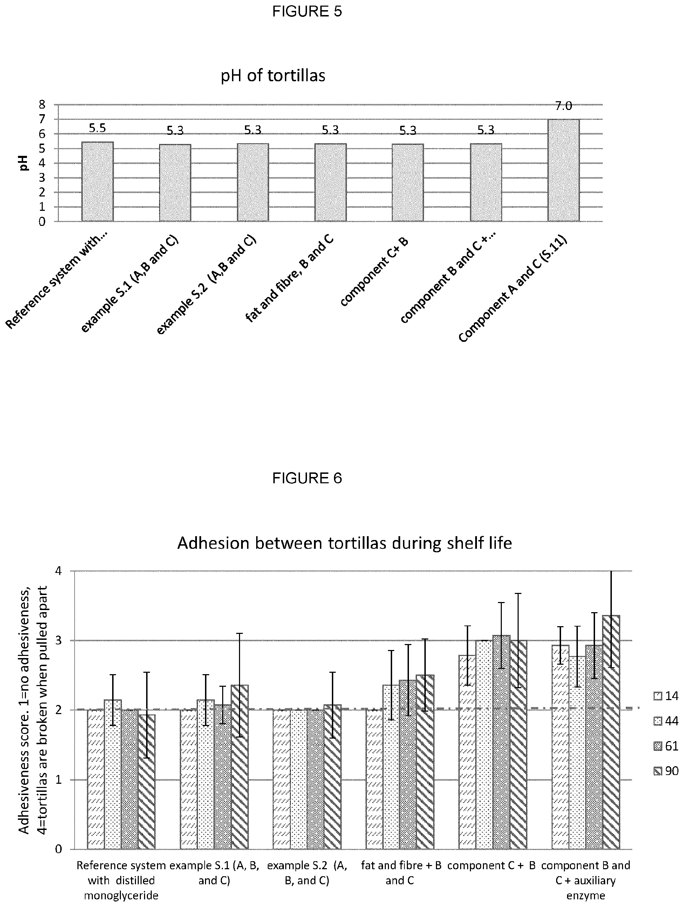

An instrumental measurement strictly relating to the flexibility of tortilla is obtained with a texture analyzer mounted with a rig that allows to clamp a tortilla. A spherical probe slowly stretching it to the break point at which point it punches though (TA and rig from Stable Micro System^{®}). During testing the distance and force are measured. The parameters collected are the extensibility (mm), force at rupture (in Netwton or g _{force}) and the work of rupture point (Nmm). The extensibility, or distance to the break point, is a measurable parameter that describes the loss of flexibility and foldability of tortilla over shelf life. (Figure 6).

All publications mentioned in the above specification are herein incorporated by reference. Various modifications and variations of the described methods and composition of the present invention will be apparent to those skilled in the art without departing from the scope and spirit of the present invention. Although the present invention has been described in connection with specific preferred embodiments, it should be understood that the invention as claimed should not be unduly limited to such specific embodiments. Indeed, various modifications of the described modes for carrying out the invention which are obvious to those skilled in chemistry applied in food industry or related fields are intended to be within the scope of the following claims.

### RESULTS

**Table 14 synopsis the components contained in the trials reported in Chart 1, 2, and 4.**

| **Description** | **Reference system with distilled monoglyc eride** | **Example S.1 Trial 1** | **Example S.2 Trial 2** | **Component C amylase and single components fibre and fat** | **Component C amylase only** | **Component C amylase and auxiliary enzyme** | **Component A and C** |
|---|---|---|---|---|---|---|---|
| **emulsifier mono glyceride** | yes | no | no | no | no | no | no |
| **acid** | yes, two sources | Yes, two sources | Yes, two sources | Yes, one sources | Yes, one source | Yes, one source | no |
| **fibre** | yes | Yes, from component A in integrated form | Yes, from component A in integrated form | Yes, added as a single ingredient | no | no | Yes, from component A in integrated form |
| **Fat (TG) from coating** | Yes, one source | Yes, two sources | Yes, two sources | Yes, one sources | Yes, one source | Yes, one source | no |
| **Fat from ingredient system** | NO | Yes, Componen t A and B. | Yes, Componen t A and B. | NO, fat added as single ingredient | NO | NO | Yes, Component A |
| **enzyme** | maltotetrag enic amylase with auxiliary enzyme | maltotetrag enic amylase with auxiliary enzymes | maltotetrag enic amylase | maltotetrageni c amylase | maltotetrage nic amylase | maltotetrage nic amyalse with auxiliary enzyme | maltotetrage nic amylase |

The tortilla characterized in Figures 6-10 were produced with a standard tortilla recipe (table 8). An acceptable ambient tortilla meets a few quality parameters, such as the water activity, pH and moisture. In Figure 5 it is shown that the pH has level of pH was 5.3 to 4 for longer life tortilla and a pH just below 7 for system without component B. pH control is achieved due to the presence of either component B in the ingredient system and/or Protex 2300 NP added as a single ingredient.

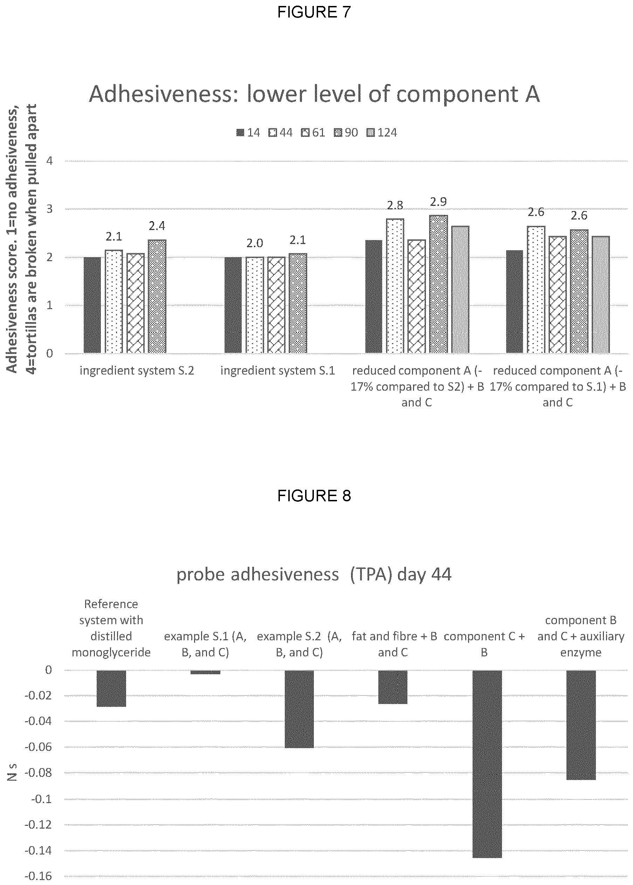

Disregarding the trial with high pH which was not on target for this trial, Figure 6 and 7 report the adhesion score of tortilla during the shelf life. Adhesion scores of 2 or below are preferable, while scores above 3 correspond to beginning of physical damage of tortilla during its use and are therefore not acceptable. The integrity of the product is pre-conditional to other aspects of quality such as freshness and foldability. The dotted line at score 2, correlating to an audible zippering sound, indicates the threshold above which the product start to become unacceptable. The study extends to 90 days. The ingredient systems example S.1 and S.2 allowed the production of tortilla that detach without damage or only minimal blister damage. From Figure 6 it is evident that once the emulsifier (E471) has been eliminated, the use of constituent ingredients of component A, or of components B or C alone do not prevent the occurrence of damaged tortilla.

The organic acid is required for all trials in order to produce tortillas with a lower pH (<6), that remain microbiologically stable over shelf life. The acid is added in coated form as this ensures tortilla that are not translucent. As a result, a certain amount of fat is delivered via the coated acid in all trials. However, it is evident from Figures 6 and 7 that addition of Protex 2300 NP alone, at the same level, is insufficient to control adhesion damage. However, for ingredient system examples S.1. and S.2, which are formulated with a level of component B sufficient to produce a neutral and mildly acidic, so not an alkaline tortilla, components A and B work synergistically to control the adhesion among tortilla.

In support of that, Figure 7 illustrates a variation of level of component A in the ingredient system. All ingredient components have been kept at the same level necessary to satisfy the condition of pH and quality, with exception of the level of the integrated fibre (component A) which was decreased (- 17% value) compared to the level used in ingredient system examples S.1 and S.2. In conjunction with such reduction, the adhesion score of tortilla increased to value above the critical threshold of 2.

The adhesion of the tortilla can be also evaluated instrumentally. A Texture Analyser mounted with a cylindrical probe an operating in Texture Profile Analysis mode was used to measure the adhesion work. Lower negative values correspond to a stickier tortilla surface in this measurement. It is evident from Figure 8 that addition of the enzymatic component alone results in higher adhesion values once the emulsifier is removed from the tortilla recipe, and that this inconvenient effect of the amylase of component C is optimally balanced in the ingredient system S.1 and S.2.

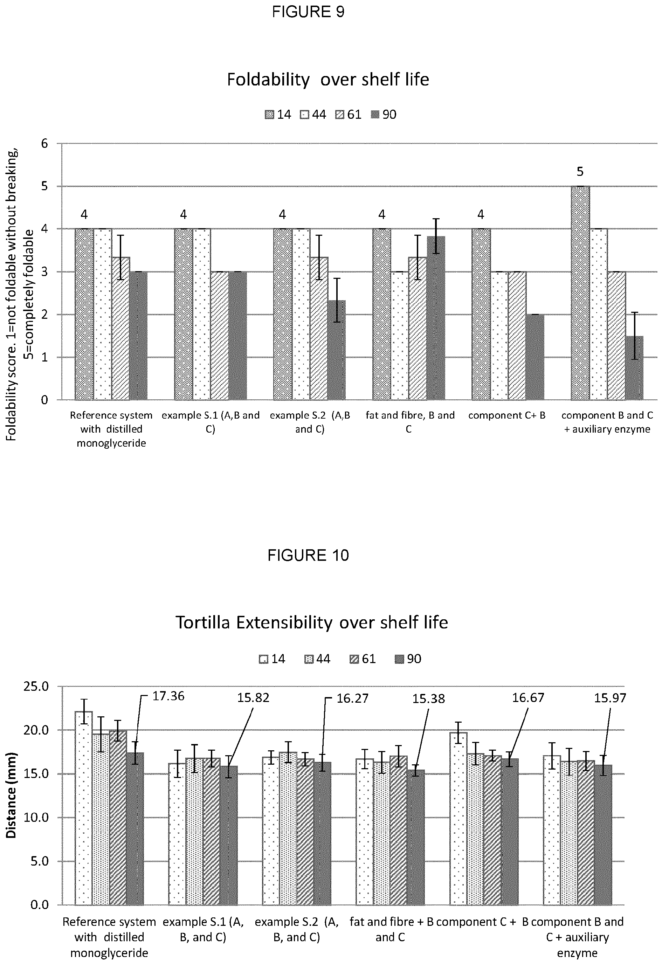

Figure 9 reports changes in foldability scores over the shelf life. The foldability scores of the ingredient system examples S.1 and S.2 are comparable to or marginally lower than those of the reference system with the emulsifier, distilled monoglyceride E 471.

Figure 10 reports the instrumental description of freshness and pliability of tortilla, measured as extensibility. There is a general decline of extensibility in during the first 90 days of shelf life. Ingredient system examples S.1 and S.2 perform marginally poorer the reference with emulsifier in terms of freshness. Appearance (translucency) and parameters such as pH, water activity and moisture are at the same level. Considering all the results Figures 6 - 10 to 4 it appears the components A, B and C deliver a level of complementarity allowing the elimination of the distilled monoglyceride in ambient tortilla.

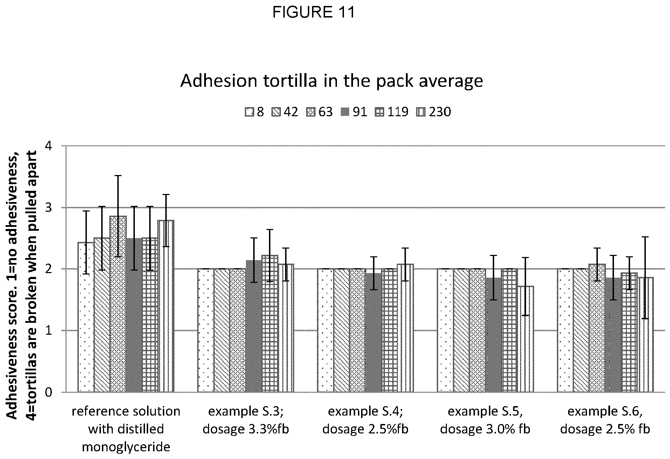

Additional formulations of the ingredient system of the invention are described in examples S.3, S.4, S.5 and S.6. Component A, as described in examples A.1 to A.4 (table 1), component B, as described in examples B.1 to B.3 (table 3) and component C (maltotetrahydrolase) in complex in auxiliary enzyme, are combined in different proportions, described in Table 4, to achieve a successful balance. The examples are tested in trials 3 to 6 using the recipe described in table 9. The performance of these solutions is described in Figures 11 - 15, which present the key aspects desired for the packaged tortilla through their shelf life and moment of use.

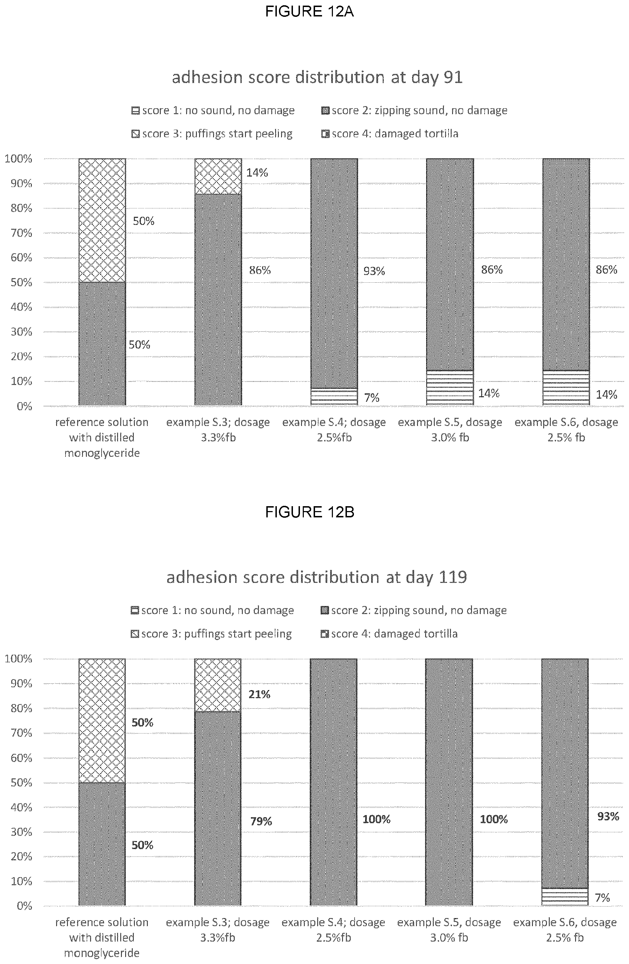

A basic requirement of the tortilla is given by parameters such as moisture, water activity and pH. The tortilla pH values satisfied the target pH of 5.2 to 5.4, which is known to be necessary for long-life tortilla in MAP. This was delivered partly via component B of the proposed ingredient system and partly by Protex 2300 NP, the dosage of which can be varied according to preferences and more stringent criteria of pH. Figures 11, 12A and 12B show the superior performance in controlling adhesion and adhesion-related damage over life for all ingredient system examples, as compared to the reference containing emulsifier. Figures 12A and 12B show in greater detail the distribution (% of tortilla) in each adhesion score bin from a total of two packets (16 tortilla pieces) assessed after 91 and 119 days (3 and 4 months) storage. The percentage of total tortilla with adhesion score 1 and 2 is equal to or higher than the reference tortilla containing distilled monoglyceride.

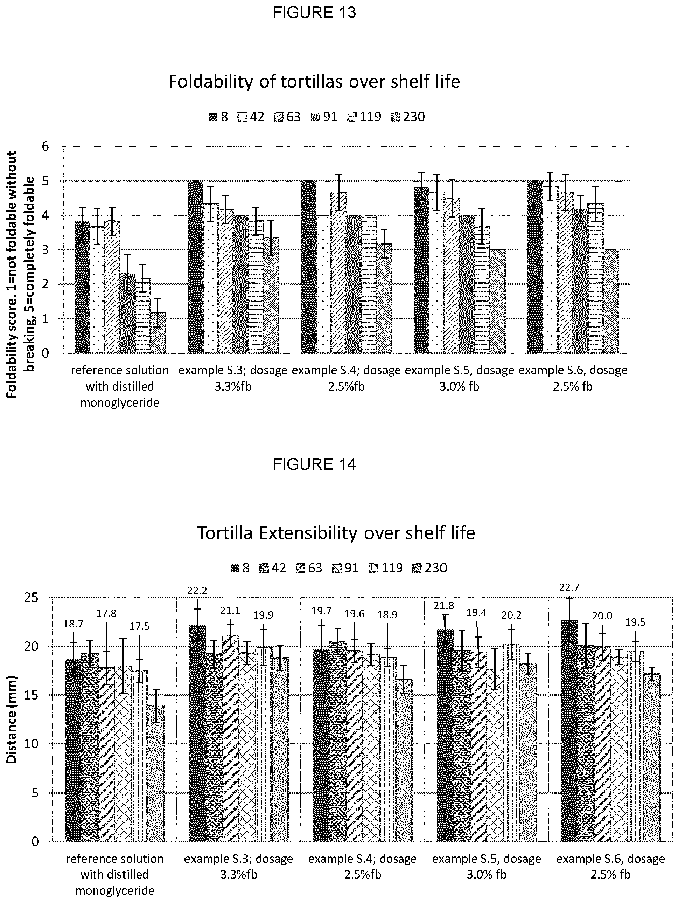

Figure 13 illustrates that the foldability for the tortilla prepared with ingredient system examples S.3, S.4, S.5 and S.6 was superior to the reference with emulsifier over 6 months of shelf life.

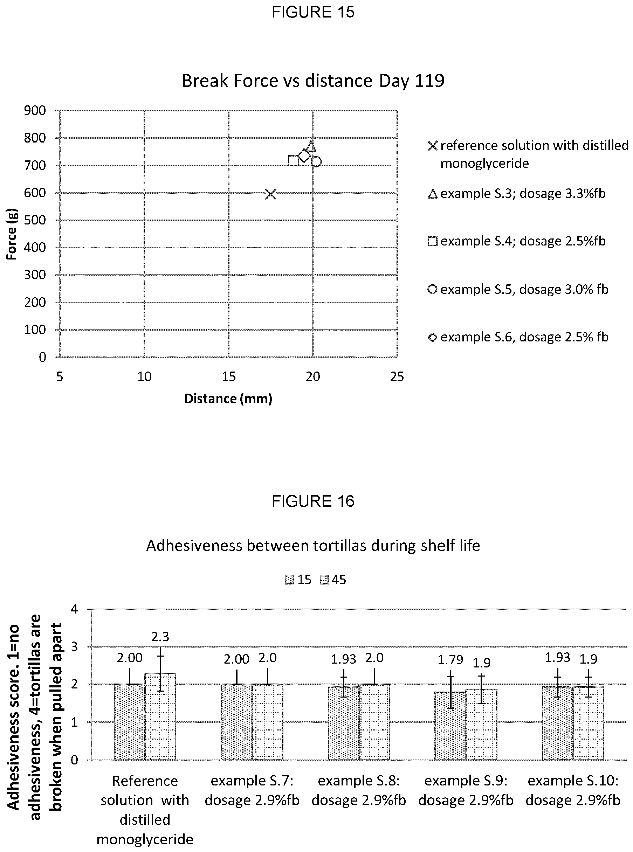

Figure 14 reports the extensibility of tortilla prepared with ingredient system examples S.3, S.4, S.5 and S.6 as superior to the reference with distilled monoglyceride during shelf life. While the values of extensibility tend to decrease during shelf life, the examples S.3 to S.6 maintained the superior performance of 16-18 mm after the first 6 months of ambient shelf life. Figure 15 reports the value of force vs extensibility to break point; results for the ingredient system examples at 119 days (4 months) of shelf life are clearly superior to those for the reference.

Figures 16, 17 and 18 present data from a comparison of two variants of maltotetrahydrolase, as the core constituent of component C in the ingredient system, as described in Table 7. Ingredient system examples S.7 and S.9. are with maltotetrahydrolase type 1 and examples S.8 and S.10 are with maltotetrahydrolase type 2. Thus ingredient systems S.7 and S.8 are comparable, but contain different amylases, as are systems S.9 and S.10. This trial was conducted to cover a short shelf-life tortilla (45 days), therefore component B delivers all the acid necessary to reach a higher tortilla pH (6.4 -6.6) and no additional coated acid is required (recipe in Table 10).

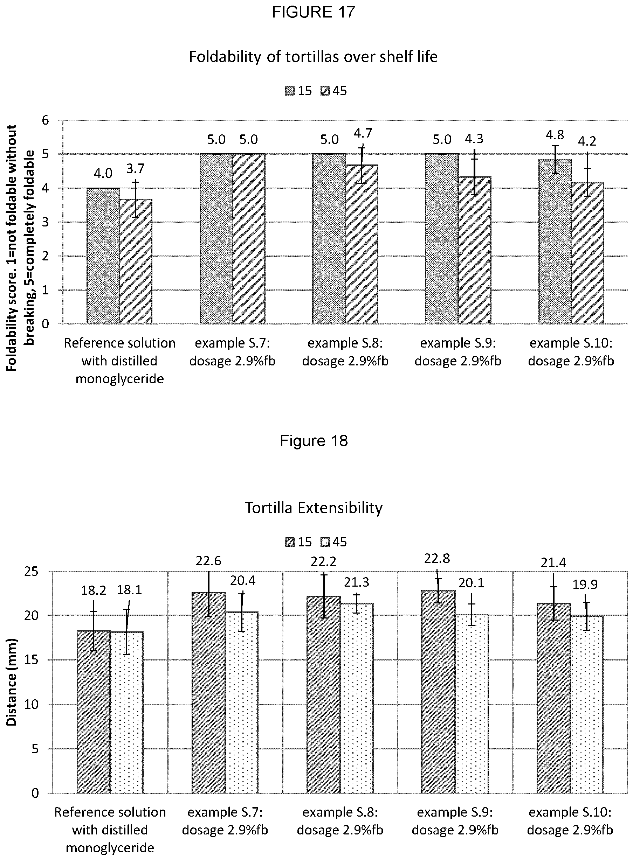

Figure 16 illustrates that adhesion damage control through the shelf life is equal or superior to the control with emulsifier and similar for both amylases, when other components of the ingredient system are held constant. Figure 17 describes a superior foldability and Figure 18 describes a superior extensibility. This supports an interchangeability of the two amylases in the system in terms of basic functionality criteria, leaving the choice to other sensorial aspects.

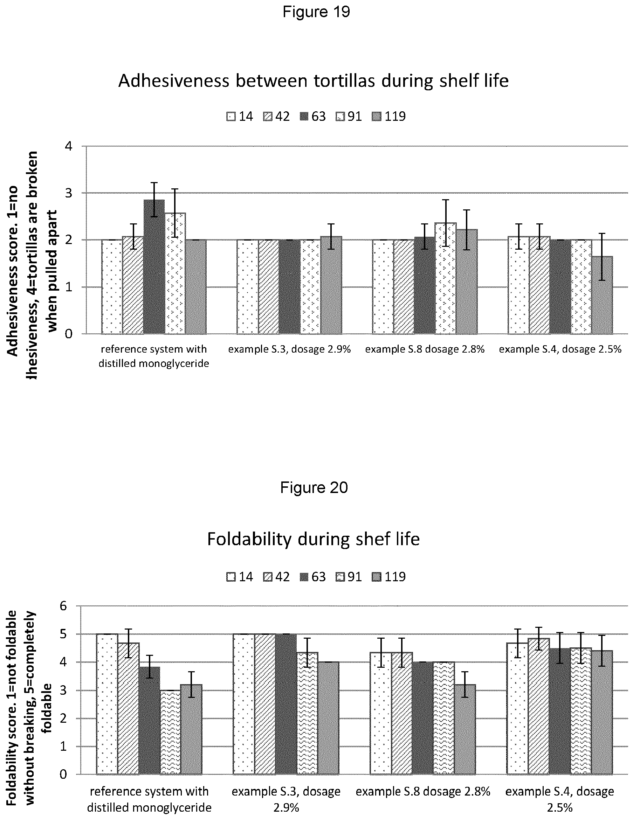

Additional trials were carried out to investigate the processability in terms of dough handling. Ingredient systems examples S.3 and S.4 and S .8 were tested according to the drop test described in figure 4 and in the method for dough processability assessment section, and the evaluation complemented by tortilla evaluation methods and reported in Figures 19, 20 and 21F. In all cases the pH of the finished tortilla was 5.6-5.7. The appearance and translucency was acceptable. Figures 19 - 21 show that the evolution of adhesion, foldability and flexibility over3-4 months of shelf-life is superior to that of the reference .

The results of dough processability testing for ingredient system examples S.3, S.4 and S.8 are summarized in table 15 below which shows the time required to release a dough ball of 100 g, kept for 30 min in a prover cabinet (abuse time condition). The benefit of low dough stickiness which is typically associated with the use of E number additive such as emulsifiers (reference with E 471) and hydrocolloids (xanthan, CMC, guar gum). Here a comparable performance is achieved with the ingredient system comprising components A, B and C that do not utilise mono-diglyceride (E 471).

**Table 15**

| Trial | Reference system with emulsifier | Example S.3, dosage 2.9%fb | Example S.8, dosage 2.8%fb | Example S.4, dosage 2.5%fb |
|---|---|---|---|---|
| Drop test time, (30 min rest) | Less than 1 s | Less than 1 s | Less than 1 s | Less than 1 s |

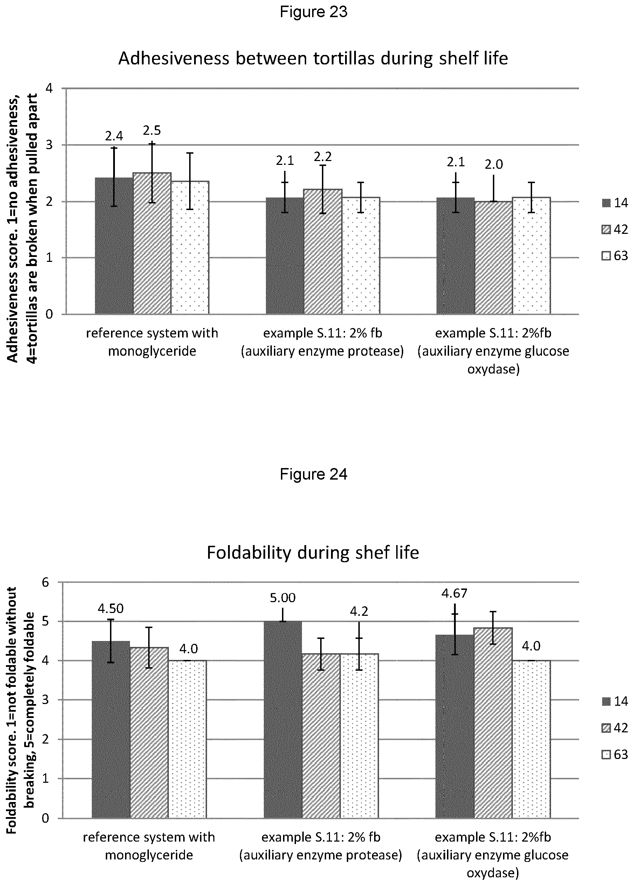

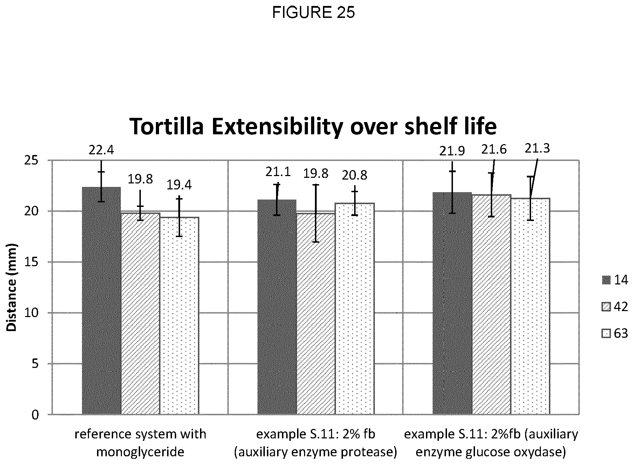

Trials 11 and 12 illustrate the performance of a simplified ingredient system containing only Components A and C, described as S.11 and S.12 (Table 8). The tortillas are produced without the addition of organic acid, or component B. In these trials the pH neutralization of the sodium bicarbonate is achieved with alternative methods and pH reduction of the tortilla is not deemed important due to the shelf-life requirements. Figure 22 shows the tortilla achieve a pH around 7. Figures 23, 24 and 25 document the adhesion, foldability and extensibility for tortilla from Trials 11 and 12 over the 60-day shelf-life. In each case, the performance of the tortilla prepared with ingredient system examples S.11 and S.12 matches or exceeds that of the reference tortilla, prepared with emulsifier.

All publications mentioned in the above specification are herein incorporated by reference. Various modifications and variations of the described methods and composition of the present invention will be apparent to those skilled in the art without departing from the scope and spirit of the present invention. Although the present invention has been described in connection with specific preferred embodiments, it should be understood that the invention as claimed should not be unduly limited to such specific embodiments. Indeed, various modifications of the described modes for carrying out the invention which are obvious to those skilled in chemistry applied in food industry or related fields are intended to be within the scope of the following claims.

## Claims

1. An ingredient system for flatbread products, comprising the following composition:
A. fat-coated vegetable fibre particles in an amount of 60-90% by weight of the composition, wherein the fat-coated vegetable fibres comprise a fat with a melting point between 40 and 80 degrees Celsius, selected from fully hydrogenated rapeseed oil or high erucic fully hydrogenated rapeseed oil, fully hydrogenated soybean oil, fully hydrogenated cottonseed oil, fully hydrogenated sunflower oil, fully hydrogenated palm, non-hydrogenated palm or a blend thereof;
B. a fat-coated organic acid in an amount of 0-30% by weight of the composition;
C. an enzyme preparation containing at least an amylase in an amount of 1-5% by weight of the composition.

2. The ingredient system, according to claim 1, wherein the fat-coated vegetable fibre particles comprise from 10% to 30% by weight of vegetable fibres and from 70 to 90% by weight of fat.

3. The ingredient system, according to any one of the preceding claims, wherein in the fat-coated vegetable fibre particles, the fibre is selected from wheat fibre, citrus fibre, carob tree husk fibre, psyllium husk powder, sugar beet fibre, soy fibre, pea fibre, apple fibre, carrot fibre, oat fibre, potato fibre and bamboo fibre.

4. The ingredient system, according to any one of the preceding claims, wherein the fat- coated organic acid comprises 60-75% by weight of citric acid, malic acid or fumaric acid.

5. The ingredient system, according to any one of the preceding claims, wherein the fat- coated organic acid comprises 25-40% by weight of a fat such as fully hydrogenated rapeseed, fully hydrogenated rapeseed oil or high erucic fully hydrogenated rapeseed oil, fully hydrogenated soybean oil, fully hydrogenated cottonseed oil, fully hydrogenated sunflower oil, fully hydrogenated palm or non-hydrogenated palm or a blend thereof.

6. The ingredient system, according to any one of the preceding claims, wherein the amylase is an exoamylase selected from maltotetragenic amylases and glucan 1,4-alpha-maltotetrahydrolases.

7. The ingredient system, according to claim 1, wherein the enzyme preparation further comprises an auxiliary enzyme selected from the group consisting of fungal protease, fungal cellulase, glucose oxidase, bacterial or fungal xylanase, 1,3 lipase or a blend thereof.

8. A flat bread containing the ingredient system as described in claims 1 to 7, in an amount between 1.5 to 6% by weight of the flour

9. The flat bread, according to claim 8, wherein it is essentially free from added mono-diglycerides.

10. The flat bread, according to claim 8 or 9, wherein the flat bread has low adhesion of maximum score 2.

11. The flat bread, according to claim 8 or 9, wherein the flat bread freshness is defined by a foldability minimum score 4.

12. The flat bread, according to claim 8 or 9, wherein the flat bread has an extensibility of minimum 17 mm.

13. The flat bread, according to any of the claims 8 to 12, comprising the ingredient system described in claims 1 to 8, wherein:
component A is present in an amount between 1.5 and 2.5% by weight of the flour,
component B is present in an amount between 0.3 and 1.2% by weight of the flour, and
component C is present in an amount between 50 to 2000 ppm by weight of flour.

14. The flat bread, according to any of the claims 8 to 12, comprising the ingredient system described in claims 1 to 8, wherein:
component A is present in an amount between 1.5 and 2.5% by weight of the flour,
component C is present in an amount between 50 to 2000 ppm by weight of flour;
wherein component B is absent in the flatbread application that does not need pH control.

15. The use of the ingredient system described in claim 1 to 7, in flatbread products, selected from the group of tortilla, wraps, lavash, roti, chapati and piadina, preferably tortilla.

## Patentansprüche

1. Zutatensystem für Fladenbrotprodukte, umfassend die folgende Zusammensetzung:
A. fettbeschichtete pflanzliche Faserpartikel in einer Menge von 60 bis 90 Gew.% der Zusammensetzung, wobei die fettbeschichteten pflanzlichen Fasern ein Fett mit einem Schmelzpunkt zwischen 40 und 80 Grad Celsius ausgewählt aus vollständig hydriertem Rapsöl oder vollständig hydriertem Rapsäl mit hohem Erukagehalt, vollständig hydriertem Sojaöl, vollständig hydriertem Baumwollsamenöl, vollständig hydriertem Sonnenblumenöl, vollständig hydriertem Palmfett, nicht-hydriertem Palmfett oder einem Gemisch davon umfassen;
B. eine fettbeschichtete organische Säure in einer Menge von 0 bis 30 Gew.% der Zusammensetzung;
C. eine Enzymzubereitung, enthaltend mindestens eine Amylase in einer Menge von 1 bis 5 Gew.% der Zusammensetzung.

2. Zutatensystem nach Anspruch 1, wobei die fettbeschichteten pflanzlichen Faserpartikel 10 Gew.% bis 30 Gew.% pflanzliche Fasern und 70 bis 90 Gew.% Fett umfassen.

3. Zutatensystem nach einem der vorhergehenden Ansprüche, wobei die Faser in den fettbeschichteten pflanzlichen Faserpartikeln ausgewählt ist aus Weizenfaser, Citrusfaser, Johannisbaumschalenfaser, Flohsamenschalenpulver, Zuckerrübenfaser, Sojafaser, Erbsenfaser, Apfelfaser, Möhrenfaser, Haferfaser, Kartoffelfaser und Bambusfaser.

4. Zutatensystem nach einem der vorhergehenden Ansprüche, wobei die fettbeschichtete organische Säure 60 bis 75 Gew.% Citronensäure, Äpfelsäure oder Fumarsäure umfasst.

5. Zutatensystem nach einem der vorhergehenden Ansprüche, wobei die fettbeschichtete organische Säure 25 bis 40 Gew.% eines Fetts umfasst, wie vollständig hydrierte Rapssamen, vollständig hydriertes Rapsöl oder vollständig hydriertes Rapsöl mit hohem Erukagehalt, vollständig hydriertes Sojaöl, vollständig hydriertes Baumwollsamenöl, vollständig hydriertes Sonnenblumenöl, vollständig hydriertes Palmfett oder nicht-hydriertes Palmfett oder eine Mischung davon.

6. Zutatensystem nach einem der vorhergehenden Ansprüche, wobei die Amylase eine Exoamylase ausgewählt aus maltotetragenen Amylasen und Glucan-1,4-alpha-maltotetrahydrolasen ist.

7. Zutatensystem nach Anspruch 1, wobei die Enzymzubereitung des Weiteren ein Hilfsenzym ausgewählt aus der Gruppe bestehend aus pilzlicher Protease, pilzlicher Cellulase, Glucoseoxidase, bakterieller oder pilzlicher Xylanase, 1,3-Lipase oder einem Gemisch davon umfasst.

8. Fladenbrot, welches das Zutatensystem wie in den Ansprüchen 1 bis 7 beschrieben in einer Menge zwischen 1,5 und 6 Gew.% des Mehls enthält.

9. Fladenbrot nach Anspruch 8, das im Wesentlichen frei von zugesetzten Monodiglyceriden ist.

10. Fladenbrot nach Anspruch 8 oder 9, wobei das Fladenbrot eine niedrige Adhäsion mit einem maximalen Score von 2 hat.

11. Fladenbrot nach Anspruch 8 oder 9, wobei die Frische des Fladenbrots durch einen minimalen Faltbarkeits-Score von 4 definiert ist.

12. Fladenbrot nach Anspruch 8 oder 9, wobei das Fladenbrot eine Dehnbarkeit von mindestens 17 mm hat.

13. Fladenbrot nach einem der Ansprüche 8 bis 12, umfassend das in den Ansprüchen 1 bis 8 beschriebene Zutatensystem, wobei:
Komponente A in einer Menge zwischen 1,5 und 2,5 Gew.% des Mehls vorhanden ist,
Komponente B in einer Menge zwischen 0,3 und 1,2 Gew.% des Mehls vorhanden ist, und
Komponente C in einer Menge zwischen 50 und 2000 Gewichts-ppm des Mehls vorhanden ist.

14. Fladenbrot nach einem der Ansprüche 8 bis 12, umfassend das in den Ansprüchen 1 bis 8 beschriebene Zutatensystem, wobei:
Komponente A in einer Menge zwischen 1,5 und 2,5 Gew.% des Mehls vorhanden ist,
Komponente C in einer Menge zwischen 50 und 2000 Gewichts-ppm des Mehls vorhanden ist;
wobei Komponente B in der Fladenbrotanwendung fehlt, die keine Einstellung des pH-Werts benötigt.

15. Verwendung des in den Ansprüchen 1 bis 7 beschriebenen Zutatensystems in Fladenbrotprodukten ausgewählt aus der Gruppe von Tortilla, Wraps, Lavash, Roti, Chapati und Piadina, vorzugsweise Tortilla.

## Revendications

1. Système d'ingrédients pour des produits de pain plat, comprenant la composition suivante :
A. des particules de fibres végétales revêtues par une graisse en une quantité de 60 à 90 % en poids de la composition, les fibres végétales revêtues par une graisse comprenant une graisse dotée d'un point de fusion compris entre 40 et 80 degrés Celsius, choisie parmi une huile de colza totalement hydrogénée ou une huile de colza totalement hydrogénée à haute teneur en acide érucique, une huile de soja totalement hydrogénée, une huile de graines de coton totalement hydrogénée, une huile de tournesol totalement hydrogénée, de la palme totalement hydrogénée, de la palme non hydrogénée ou un mélange correspondant ;
B. un acide organique revêtu par une graisse en une quantité de 0 à 30 % en poids de la composition ;
C. une préparation enzymatique contenant au moins une amylase en une quantité de 1 à 5 % en poids de la composition.

2. Système d'ingrédients, selon la revendication 1, les particules de fibres végétales revêtues par une graisse comprenant de 10 % à 30 % en poids de fibres végétales et de 70 à 90 % en poids de graisse.

3. Système d'ingrédients, selon l'une quelconque des revendications précédentes, dans les particules de fibres végétales revêtues par une graisse, la fibre étant choisie parmi une fibre de blé, une fibre d'agrume, une fibre de cosse de caroubier, une fibre de cosse de psyllium, une fibre de betterave à sucre, une fibre de soja, une fibre de pois, une fibre de pomme, une fibre de carotte, une fibre d'avoine, une fibre de patate et une fibre de bambou.

4. Système d'ingrédients, selon l'une quelconque des revendications précédentes, l'acide organique revêtu par une graisse comprenant 60 à 75 % en poids d'acide citrique, d'acide maléique ou d'acide fumarique.

5. Système d'ingrédients, selon l'une quelconque des revendications précédentes, l'acide organique revêtu par une graisse comprenant 25 à 40 % en poids d'une graisse telle que du colza totalement hydrogéné, une huile de colza totalement hydrogénée ou une huile de colza totalement hydrogénée à haute teneur en acide érucique, une huile de soja totalement hydrogénée, une huile de graines de coton totalement hydrogénée, une huile de tournesol totalement hydrogénée, de la palme totalement hydrogénée, de la palme non hydrogénée ou un mélange correspondant.

6. Système d'ingrédients, selon l'une quelconque des revendications précédentes, l'amylase étant une exoamylase choisie parmi des amylases maltotétragéniques et des glucane 1,4-alpha-maltotétrahydrolases.

7. Système d'ingrédients, selon la revendication 1, la préparation enzymatique comprenant en outre une enzyme auxiliaire choisie dans le groupe constitué par une protéase fongique, une cellulase fongique, une glucose oxydase, une xylanase bactérienne ou fongique, une 1,3-lipase ou un mélange correspondant.

8. Pain plat contenant le système d'ingrédients tel que décrit dans les revendications 1 à 7, en une quantité comprise entre 1,5 et 6 % en poids de la farine.

9. Pain plat, selon la revendication 8, qui est essentiellement exempt de mono-diglycérides ajoutés.

10. Pain plat, selon la revendication 8 ou 9, le pain plat ayant une faible adhérence d'un score maximum de 2.

11. Pain plat, selon la revendication 8 ou 9, la fraîcheur du pain plat étant définie par un score minimum de pliabilité de 4.

12. Pain plat, selon la revendication 8 ou 9, le pain plat ayant une extensibilité de minimum 17 mm.

13. Pain plat, selon l'une quelconque des revendications 8 à 12, comprenant le système d'ingrédients décrit dans les revendications 1 à 8,
le composant A étant présent en une quantité comprise entre 1,5 et 2,5 % en poids de la farine,
le composant B étant présent en une quantité comprise entre 0,3 et 1,2 % en poids de la farine, et
le composant C étant présent en une quantité comprise entre 50 et 2 000 ppm en poids de la farine.

14. Pain plat, selon l'une quelconque des revendications 8 à 12, comprenant le système d'ingrédients décrit dans les revendications 1 à 8,
le composant A étant présent en une quantité comprise entre 1,5 et 2,5 % en poids de la farine,
le composant C étant présent en une quantité comprise entre 50 et 2 000 ppm en poids de la farine ;
le composant B étant absent dans l'application de pain plat qui ne nécessite pas une régulation du pH.

15. Utilisation du système d'ingrédients décrit dans la revendication 1 à 7, dans des produits de pain plat, choisis dans le groupe composé de tortilla, wraps, lavash, roti, chapati et piadina, préférablement tortilla.
